# EUROPEAN PATENT APPLICATION

(11) **EP 1 886 978 A1**
(43) Date of publication of application: **13.02.2008**
(21) Application number: 07004394.8
(22) Date of filing: 03.03.2007
(51) Int. Cl.: C03C 1/00, C03C 13/00, C03C 3/087

(54) **Method for making glass fibers**

(30) Priority: 23.03.2006 US 350964
(71) Applicant: Johns Manville, Denver CO 80202 (US)
(72) Inventor: Bauer, Jon Frederick, Castle Rock Colorado 80108 (US); Gee, Susan McMillin, Littleton Colorado 80120 (US); Hamilton, Robert David, Parker Colorado 80138 (US)
(74) Representative: Luderschmidt, Schüler & Partner

(57) **Abstract**

The invention is an improved method for manufacturing fiberglass. In the method of the invention, quartz is replaced in whole or in part by silica containing raw materials. The use of silica containing raw materials as a replacement for quartz results in significant energy savings and a reduction in defect producing components in the glass.

## Description

### TECHNICAL FIELD

The invention relates to a method for manufacturing glass fibers. The method uses non-quartz silica containing raw materials as a partial or complete substitute for quartz in the glass making process. The method results in substantial energy saving in the glass making process and reduces the presence of defect-producing components resulting in fewer strength limiting defects in the glass.

### BACKGROUND OF THE INVENTION

Quartz (SiO₂) is a major component of most commercial glass fibers. It is generally introduced into the initial glass batch as a naturally-occurring mineral in the form of sand, flint, or other mined crystalline silica source. It is used principally because of its good regional availability and relatively low cost. For textile or chopped fiber production, quartz can comprise up to about 40 percent by weight of the batch.

Quartz, however, is the most refractory component of many glass batches. As such, it requires the presence of reactive agents such as sources of calcium, sodium or boron in intimate contact with the quartz to provide fluxing to allow the quartz to dissolve in early-forming melts. Even in the presence of such reactive agents, fine quartz crystals often persist which, in turn, can lead to fiber breakout during production. This adds to the cost of fiber production. In addition, fine quartz particles can also convert to cristobalite at melter temperatures. This high temperature form of silica usually resists dissolution resulting in the formation of extremely fine defects that can cause breakout or brittleness in the finished product.

A related problem may also occur when quartz grains persist, but melt out further downstream where temperatures may be cooler. In these situations, high silica viscosity melts are formed which do not mix well in the bulk melt. The result is silica pockets or cords that can either devitrify to form cristobalite or flow directly into the bushing or fiberization orifice where their higher viscosities can result in dramatically increased forming stresses. This again, results in breakouts and brittleness in the final product.

In addition to quartz, limestone is often used as a source of calcium for glass fiber formation. Limestone, which is essentially calcite (CaC0₃) breaks down to form CaO and CO₂. This endothermic reaction consumes significant amounts of heat which would be otherwise available for maintaining melt temperatures for refining and homogenization of the glass. In addition, the creation of CO₂ leads to the production of foam which retards heat transfer and increases energy consumption.

It would be desirable, therefore, to either increase the dissolution of quartz or to reduce or eliminate the amount of quartz used to produce glass fiber. In addition, it would be desirable to reduce or eliminate the use of limestone to produce glass fiber.

### SUMMARY OF THE INVENTION

In the process of the invention, one or more typical raw materials are replaced with pre-reacted materials. Pre-reacted materials are raw materials which are natural or synthetic in nature and generally require less energy to achieve a satisfactory final product.

Among the pre-reactive materials useful in the practice of the invention are those where undesirable contaminants or their precursors are absent, materials where two or more key elements are present and glass-like materials where at least partial melting has occurred. In each case, the pre-reactive material serves as a partial or complete replacement for one or more traditional raw materials.

The use of these pre-reactive materials results in significant energy savings and produces end-products with significantly reduced brittleness and breakouts. The amounts of these pre-reactive materials is dependent upon the desired properties of the finished glass as well as the mixture of any other raw materials used in the process.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:
FIG. 1 is a plot of heats of melting for batches A through K in the examples.
FIG. 2 are photographs of glass batch melts at 1050°C for four (4) hours.

### DETAILED DESCRIPTION OF THE INVENTION

The invention relates to a method for making glass fibers using pre-reacted materials as a partial or complete replacement for one or more typical raw materials. The use of pre-reacted materials reduces the energy need to form the glass fibers and reduces brittleness and breakouts in the resulting glass fibers.

Among the raw materials traditionally used to make glass fibers are quartz, clays, such as kaolin and limestone (CaCO₃). Other traditional raw materials include borax, boric acid, lime and salt cake. By substituting one or more of these traditional materials in whole or in part with a pre-reacted material, reduction in energy costs and improvement in quality can be achieved.

A "pre-reacted material" includes materials with a chemical composition that requires less energy to form glass or when the material has undergone a chemical or physical change whereby less energy is needed to form glass. For example, calcium oxide in the form of quick lime can be used to replace all or part of the limestone present in the current formulations. The use of calcium oxide reduces or eliminates the formation of carbon dioxide which consumes energy during the next process. It also reduces or eliminates the formation of foam which leads to undesirable product attributes..

One area where significant energy reduction can be achieved is by substituting one or more silica containing raw materials such as quartz and clay with a silica containing pre-reacted material or blend of silica containing pre-reacted materials. Particularly useful silica containing pre-reactive materials include calcium silicate, volcanic glasses such as pumice, obsidian, perlite and pitchstone and mixtures thereof, vitreous slags, diatomaceous earth, feldspars and blends thereof. Calcium silicate also acts as a calcium containing pre-reacted material, acting as a substitute for traditional calcium containing raw materials such as limestone. Calcium silicate typically contains about 52 weight percent SiO₂ and 48 weight percent CaO. Similarly, volcanic glasses often contain significant amounts of aluminum, allowing them to act as a substitute for traditional aluminum containing raw materials such as clay. A typical volcanic glass may contain up to 71% weight at percent 5.O₂, 13 weight percent Al₂ O₃ and 1 weight percent CaO. These silica containing pre-reacted materials can be used in amounts ranging from about 4 to about 40 weight percent of the final mixture before melting depending, in part, on the nature of the pre-reacted material. For example, calcium silicate may be used in amounts ranging from about 20 to about 40 weight percent;, volcanic glasses may be used in amounts from about 4 to 20 weight percent; diatomaceous earth may be used in amounts ranging from 5 to 20 weight percent and calcium containing feldspar such as anorthite may be used in amounts from about 30 to about 40 weight percent.. As understood by those skilled in the art, the actual amounts will vary depending on such factors as the desired final composition, whether the pre-reacted material is used as a complete or partial substitute for the traditional raw materials and the presence of other raw materials, including other pre-reacted materials

Energy reduction can also be achieved by complete of partial substitution of calcium containing raw materials with calcium containing pre-reacted materials. As discussed above, one embodiment of the invention uses calcium silicate as a partial or complete substitute for both the silica containing raw materials and the calcium containing raw materials. In another embodiment, Calcium oxide in the form or quicklime is used to replace the calcium containing raw materials. In additional blends of calcium containing pre-reacted materials can be used The amounts of the calcium containing materials may range from about 4 to 40 weight percent of the mixture before melting depending, in part, on the nature of the calcium containing re-reacted material. For example calcium silicate an be used in an amount equaling from about 5 to about 40 weight percent of the mixture before melting with from about 20 to 30 weight percent more typical. Similarly calcium oxide can be used in an amount equaling about 5 to 25 weight percent of the mixture before melting with from about 15 to 20 weight percent more typical.

In each case, the pre-reacted materials are combined with other raw materials to form a raw material mixture which is then melted in a conventional manner to a molten glass composition. Glasses are typically formed by preparing raw material mixtures of quartz, limestone, kaolin, and fluxes such as borates. The mixture is then heated at a temperature of at least 1000°C more typically or more until a homogeneous melt is formed. This melt is then shaped into the desired finished product. For example, glass fiber is typically formed by forcing the melt through spinnerettes then by forming strands or fibers of glass.

In addition to the pre-reacted materials described above, other pre-reacted materials that can be used in the practice of the invention include, kaolinite clays, borosilicates, calcium magnesium silicate, calcium aluminum silicates, cement dust and similar materials. They can be from naturally occurring process or as a direct or evident result of synthetic process.

As discussed above, the amounts of pre-reacted materials used will depend upon the nature of the pre-reactive material and whether the pre-reacted material is intended to be used as a complete or partial replacement for one or more traditional raw materials. The key is that the resulting product has the desired composition. For example, for glass fibers made from E-glass, a typical compositional target is shown in Table 1.

**TABLE 1**

| TYPICAL E-GLASS COMPOSITIONAL RANGES | |
|---|---|
| Oxide | Amount (by weight) |
| Si0₂ | 57.0% ±5 |
| CaO | 20.3% ±5 |
| Al₂O₃ | 14.0% ±2 |
| B₂O₃ | 5.0% ±5 |
| MgO | 2.5% ±2.5 |
| Na₂O + K₂O | 1.0% ±1 |
| TiO₂ | 1.0% ±1 |
| Fe₂O₃ | 0.5% ±0.5 |
| K₂0 | 0.1% |

The composition of E-glass can also be found in Section 4.2.2 of ASTM specification D-578-00.

The amount of pre-reacted material used in the present invention is determined by calculating the amount of pre-reaction material needed, in conjunction with other material used, to achieve the desired amount of oxides present in the finished product. For example, to manufacture an e-glass fiber of being about 55% Si0₂, 22% CaO, and 14% Al₂O₃, 31.3 wt% quartz (flint), 29.3% limestone, and 28.1 wt% kaolin are often used. The same glass can be produced using 37.9 wt% calcium silicate, 26.0 wt% kaolin, and 16.8 wt% volcanic glass only 5% of a silica source such as quartz or diatomaceous earth.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

### EXAMPLES

A series of samples were prepared having the target composition reflected in Table 2 below using the batch variations listed in Table 3:

**TABLE 2: Target composition of glass used in batch variation studies**

| Oxide Component | Wt.% |
|---|---|
| SiO₂ | 55.0 |
| Al₂O₃ | 13.5 |
| B₂O₃ | 5.0 |
| Fe₂O₃ | 0.25 |
| Ti0₂ | 0.55 |
| CaO | 22.3 |
| MgO | 2.0 |
| Na₂O | 1.3 |
| K₂O | 0.1 |

**Table 3: Batch variations for glass composition in Table 2.**

| | BATCH COMPOSITION (BY WEIGHT) | | | | | | | | | | | |
|---|---|---|---|---|---|---|---|---|---|---|---|---|
| | A | B | C | D | E | F | G | H | I | J | K | L |
| Raw material | Limestone (Baseline) | Quicklime | Ca Silicate | Volcanic Glass | Ca Silicate & Volcanic Glass | Quartz-free #1 | Quartz-free #2 | Limestone/ Slag | Ca- Silicate/Slag | Quartz-free #3 | Quartz and Clay free | Ca-Silicate/Feldspar |
| Quartz (flint) | 31.3% | 35.9% | 15.2% | 22.6% | 8.5% | 0% | 0% | 22.3% | 5.7% | 0% | 0% | 19.9% |
| Kaolin Clay | 28.1% | 32.3% | 32.0% | 23.0% | 28.2% | 26.4% | 0% | 22.7% | 26.0% | 26.0% | 0% | 0% |
| BD Lime | 3.4% | 4.3% | 3.9% | 3.3% | 3.8% | 3.7% | 4.3% | 2.8% | 3.1% | 3.1% | 4.3% | 4.4% |
| Borax | 4.7% | 5.2% | 5.2% | 0% | 1.5% | 0% | 0% | 0% | 0% | 0% | 1.1% | 1.1% |
| Boric Acid | 3.2% | 3.9% | 3.6% | 7.3% | 6.9% | 8.2% | 8.6% | 7.3% | 8.2% | 8.2% | 7.7% | 7.8% |
| Salt Cake | 0.2% | 0.2% | 0.2% | 0.2% | 0.2% | 0.2% | 0.2% | 0.2% | 0.2% | 0.2% | 0.2% | 0.2% |
| Limestone | 29.1% | 0% | 0% | 28.7% | 0% | 0% | 0% | 27.9% | 0% | 0% | 0% | 0% |
| Quicklime | 0% | 18.3% | 0% | 0% | 0% | 0% | 0% | 0% | 0% | 0% | 0% | 0% |
| Calcium Silicate | 0% | 0% | 39.9% | 0% | 39.1% | 39.0% | 27.0% | 0% | 37.9% | 37.9% | 26.5% | 26.6% |
| Volcanic Glass | 0% | 0% | 0% | 14.9% | 11.8% | 17.0% | 4.2% | 14.7% | 16.8% | 16.8% | 0% | 0% |
| Diatomaceous Earth (DE) | | | | | | 5.5% | 17.4% | 0% | 0% | 5.7% | 20.0% | 0% |
| Plagioclase Feldspar | | | | | | 0% | 38.3% | 0% | 0% | 0% | 40.1 % | 40.1 % |
| Slag | | | | | | 0% | 0% | 2.0% | 2.0% | 2.0% | 0% | 0% |
| Total | 100% | 100% | 100% | 100% | 100% | 100% | 100% | 100% | 100% | 100% | 100% | 100% |
| Volume of CO₂ @ 1400C | 1668 | 0 | 0 | 1647 | 0 | 0 | 0 | 1624 | 0 | 0 | 0 | 0 |

**Table 4**

| | % Melt at 1050 C | % Quartz Remaining at 1050 C | % Quartz Reduction at 1050 C |
|---|---|---|---|
| Method | Crucible Melt | Crucible Melt | Crucible Melt |
| Batch A (Std. Limestone) | 86.5 | 7.2 | 77.1 |
| Batch B | 87.5 | 6.5 | 82.3 |
| Batch C | 97.0 | 1.5 | 90.1 |
| Batch D | 88.7 | 4.0 | 82.3 |
| Batch E | 93.2 | 0.8 | 93.2 |
| Batch F | 96.5 | 0 | 100 |
| Batch G | 95.0 | 0 | 100 |
| Batch H | 96.0 | 1.0 | 95.5 |
| Batch I | 97.7 | 0.5 | 91.2 |
| Batch J | 98.1 | 0 | 100 |
| Batch K | 95.6 | 0 | 100 |
| Batch L | 92.6 | 2.0 | 90.0 |
| Preferred Direction** | H | L | H |

| | | | |
|---|---|---|---|
| ** L = lower value is preferred; H = higher value is preferred | | | |

**Table 5**

| Batch No. | Batch Type | DSC Peak Endotherm Temp deg C | Heat Flow at Peak Endotherm (mW/mg) |
|---|---|---|---|
| A | Std. Limestone | 1181 | 0.53 |
| B | Quicklime | 1175 | 0.63 |
| C | Calcium Silicate | 1156 | 0.60 |
| D | VG | 1168 | 0.57 |
| E | VG, CS | 1139 | 0.84 |
| F | VG, CS, DE* | 1140 | 0.74 |
| G | VG, CS, DE, CAS* | 1131 | 0.87 |
| H | VG, Slag | 1167 | 0.75 |
| I | VG, Slag, CS | 1142 | 0.66 |
| J | VG, Slag, CS, DE* | 1124 | 0.68 |
| K | CS, CAS, DE | 1136 | 0.77 |
| L | CS, CAS** | 1164 | 0.82 |

| | | | |
|---|---|---|---|
| VG = volcanic Glass, CS = calcium silicate, CAS = calcium aluminum silicate (feldspar), DE = diatomaceous earth (amorphous silica) * Quartz-free ** Quartz and clay-free | | | |

Each sample was heated in a vitreous silica container to about 1050°C for four hours and then quenched to room temperature. The use of transparent silica containers allowed easy visualization and comparison of the progression of the reaction in each batch. After quenching, the samples were removed from the crucibles and analyzed using x-ray diffraction to determine the identity and amounts of residual crystalline material remaining in the batch.

In a second series of experiments, a second set of samples were heated over time and the reaction kinetic studied using differential scanning calorimetry. The samples were heated to 1500°C at a rate of 20 °C/min. Heat flow curves were recorded for each batch. The results are shown in Table 3.

### RESULTS

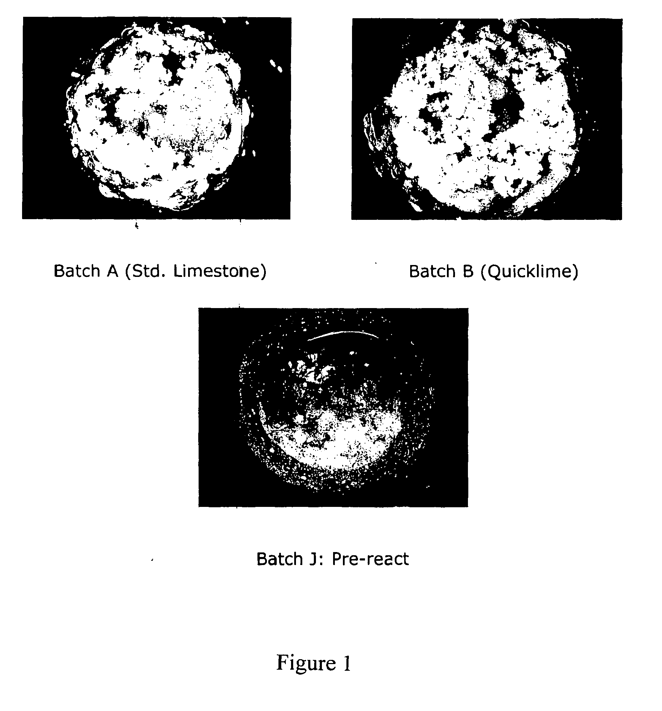

Visual results from the batch melting experiments are shown in Figure 1. The distribution between melt (glass) and residual crystalline material is readily detected by the eye. Batches made with traditional raw materials showed significant amounts of unreacted batch or crystalline material. Those contain pre-reacted materials, especially wollastonite and volcanic glass showed proportionally larger amounts of glass indicating that the use of pre-reacted enables faster melt out.

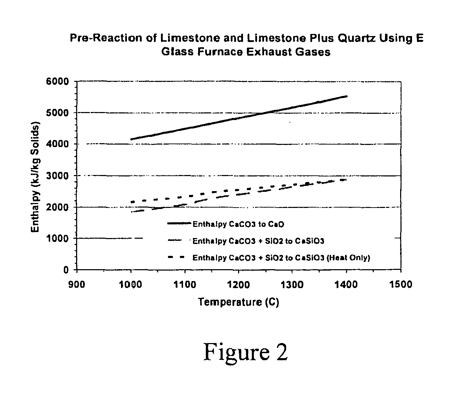

Thermodynamic results are shown in Figure 2. Again, the standard glass formula showed the highest melting enthalpy whereas volcanic glass as a partial replacement for quartz had a lower energy demand. Use of quick lime or calcium silicate resulted in the lowest energy demands.

X-ray diffraction results as shown in Table 4. Again, the traditional formulations, as well as those with limestone and quick lime showed the highest amount of residual quartz and the least amount of glass formed.

DSC results of melt out are shown in Table 5. Peak endotherm temperatures are those where batch melt out is achieved. Lower temperatures are most desirable. Heat flow at peak endotherm reflects the reaction kinetics; higher heat flows are most desirable indicating faster kinetics.

## Claims

1. A glass composition prepared by melting a mixture comprising a silica containing pre-reacted material.

2. The glass composition of claim 1 wherein the silica containing pre-reacted material is selected from the group consisting of calcium silicate, volcanic glass, diatomaceous earth, calcium containing feldspar, vitreous slag, and blends thereof.

3. The glass composition of claim 1 wherein the silica containing reacted material is present in an amount ranging from about 4 to about 40 weight percent of the mixture before melting.

4. The glass composition of claim 1 where the silica containing pre-reacted material comprises about 20 to about 40 weight percent calcium silicate.

5. The glass composition of claim 1 wherein the silica containing pre-reacted composition comprises about 4 to about 20 weight percent volcanic glass.

6. The glass composition of claim 5 wherein the volcanic glass is selected from the group consisting of pumice, obsidian, perlite, pitchstone, and mixtures thereof.

7. The glass composition of claim 1 wherein the silica containing pre-reacted material comprises about 5 to about 20 weight percent diatomaceous earth.

8. The glass composition of claim 1 wherein the silica containing pre-reacted material comprises about 5 to about 40 weight percent calcium containing feldspar.

9. A glass composition prepared from a mixture comprising a calcium containing pre-reacted material.

10. The glass composition of claim 9 wherein the calcium containing composition comprises about 15 to about 40 weight percent of the mixture.

11. The glass composition of claim 9 wherein the calcium containing pre-reacted material is selected from the group consisting of calcium silicate, calcium oxide and blends thereof.

12. The glass composition of claim 9 wherein the calcium containing pre-reacted material comprises about 4 to about 40 weight percent of calcium silicate.

13. The glass composition of claim 9 wherein the calcium containing pre-reacted material comprises about 15 to about 25 weight percent calcium oxide.

14. A glass composition prepared from a mixture of calcium containing pre-reacted materials and silica containing pre-reacted materials.

15. The glass composition of claim 14 wherein the pre-reacted silica containing material comprises about 4 to about 40 weight percent of the mixture and the calcium containing pre-reacted material comprises from about 20 to about 40 weight percent of the mixture.

16. The glass composition of claim 1 wherein the glass is E-glass.

17. The glass composition of claim 16 wherein the E-glass is in the form of fiberglass.

18. A glass composition prepared by melting a mixture comprising about 4 to about 40 weight percent silica containing pre-reactive material selected from the group consisting of calcium silicate, volcanic glass, diatomaceous earth, calcium containing sfeldspar, vitreous slag and blends thereof.

19. The glass composition of claim 16 wherein the mixture comprises about 20 to about 40 weight percent silica containing pre-reacted material.

20. The glass composition of claim 18 wherein the volcanic glass is selected from the group consisting of pumice, obsidian, perlite, pitchstone and mixtures thereof.

21. The glass composition of claim 18 wherein the mixture further comprises about 5 to about 40 weight percent of a calcium containing pre-reacted material.

22. The glass composition of claim 21 wherein the calcium containing pre-reacted material is selected from the group consisting of calcium silicate, calcium oxide and blends thereof.

23. The glass composition of claim 18 wherein the glass composition is E-glass.

24. The glass composition of claim 23 wherein the glass is formed into glass fiber.

25. A raw material mixture for the production of a glass composition comprising 4 to 40 weight percent of a silica containing pre-reacted material.

26. The raw material mixture of claim 26 wherein the silica containing pre-reacted material is selected from the group consisting of calcium silicate, volcanic glass, diatomaceous earth, calcium containing feldspar, vitreous slag and blends thereof.

27. The raw material mixture of claim 27 wherein the volcanic glass is selected from the group consisting of pumice, obsidian, perlite, pitchstone and mixtures thereof.

28. The raw material mixture of claim 26 wherein the silica containing pre-reacted material comprises about 20 to about 40 weight percent calcium silicate.

29. The raw material mixture of claim 26 wherein the silica containing pre-reacted material comprises about 4 to about 20 weight percent volcanic glass.

30. The raw material mixture of claim 26 wherein the silica containing pre-reacted material comprises about 5 to about 20 weight percent diatomaceous earth.

31. The raw material mixture of claim 26 further comprising about 5 to about 40 weight percent of a calcium containing pre-reacted raw material.

32. The raw material mixture of claim 32 wherein the calcium containing pre-reacted material is selected from the group consisting of calcium silicate and calcium oxide.

33. A method for making glass products comprising the steps of: preparing a raw material mixture comprising about 4 to about 40 weight percent of a silica containing pre-reacted material; melting the raw material mixture to form a homogeneous melt; and forming the melt into a glass product.

34. The method of claim 34 wherein the silica containing pre-reacted material is selected from the group consisting of calcium silicate, volcanic glass, diatomaceous earth, vitreous slag and blends thereof.

35. The method of claim 35 wherein the volcanic glass is selected from the group consisting of pumice, obsidian, perlite, pitchstone and mixtures thereof.

36. The method of claim 35 wherein the melting is accomplished at a temperature of at least 1000° C.

37. The method of claim 35 wherein the glass product is glass fiber.

38. The method of claim 34 wherein the raw material mixture further comprises about 5 to about 40 weight percent of a calcium containing pre-reacted material.

39. The method of claim 39 wherein the calcium containing pre-reacted material is selected from the group consisting of calcium silicate, calcium oxide and blends thereof.
